# EUROPEAN PATENT APPLICATION

(11) **EP 4 280 158 A1**
(43) Date of publication of application: **22.11.2023**
(21) Application number: 23161473.6
(22) Date of filing: 13.03.2023
(51) Int. Cl.: G06T 7/73

(54) **METHOD FOR DETECTING AN OBJECT BASED ON MONOCULAR CAMERA, ELECTRONIC DEVICE, AND NON-TRANSITORY STORAGE MEDIUM STORING THE METHOD**

(30) Priority: 19.05.2022 CN 202210556465
(71) Applicant: HONGFUJIN PRECISION ELECTRONS (YANTAI) CO., LTD., Yantai (CN); Hon Hai Precision Industry Co., Ltd., New Taipei City (TW)
(72) Inventor: TSAI, CHIN-HSIUNG, New Taipei (TW); CHIU, TE-JEN, New Taipei (TW); YEH, CHIA-LUN, New Taipei (TW); TANG, HSUEH-YUNG, New Taipei (TW); LIAO, YING-LIANG, New Taipei (TW)
(74) Representative: Zaboliene, Reda

(57) **Abstract**

A method for detecting an object utilizing a monocular camera obtains an image showing an object and determining a pixel coordinate of the object in the image and determining a spatial position of the object in the image, based on the pixel coordinate of the object in the image and a preset coordinate transformation relationship or a preset depth prediction model. The image showing the object is obtained through the monocular camera, and the pixel coordinates of the object in the image are determined. According to the pixel coordinates of the object in the image and the preset coordinates transformation relationship or the preset depth prediction model, the spatial position of the object in the image is determined, providing efficient and accurate detection. An electronic device and a non-transitory storage recording the method are also disclosed.

## Description

### FIELD

The subject matter herein generally relates to image processing.

### BACKGROUND

The application of automobile and navigation in people's life is becoming more and more popular with the progress of science and technology. The obstacle detection of measurement by vision technology also has important applications in the field of vehicle assisted driving, robot navigation and so on.

At present, the common visual measurement technologies comprise monocular vision measurement, binocular vision measurement, and structured light vision measurement. The binocular vision measurement structure is more complex, and the time of measurement is longer. The measurement system calibration of the structured light vision measurement is more difficult and is expensive in intelligent applications such as vehicle-assisted driving and robot navigation.

### BRIEF DESCRIPTION OF THE DRAWINGS

Implementations of the present disclosure will now be described, by way of embodiments, with reference to the attached figures.
FIG. 1 is a flowchart of an embodiment of a method for detecting an object based on monocular camera according to the present disclosure.
FIG. 2 shows positioning coordinate points of object in an image..
FIG. 3 is an application scenario of the method.
FIG. 4 shows depth marking points at different positions of the ground in the image.
FIG.5 is a function schematic diagram of an object detection device based on monocular camera.
FIG.6 shows architecture of electronic device in one embodiment.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure. It should be noted that references to "an" or "one" embodiment in this disclosure are not necessarily to the same embodiment, and such references mean "at least one".

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "comprising," when utilized, means "including, but not necessarily limited to"; it specifically indicates open-ended inclusion or membership in the so-described combination, group, series, and the like.

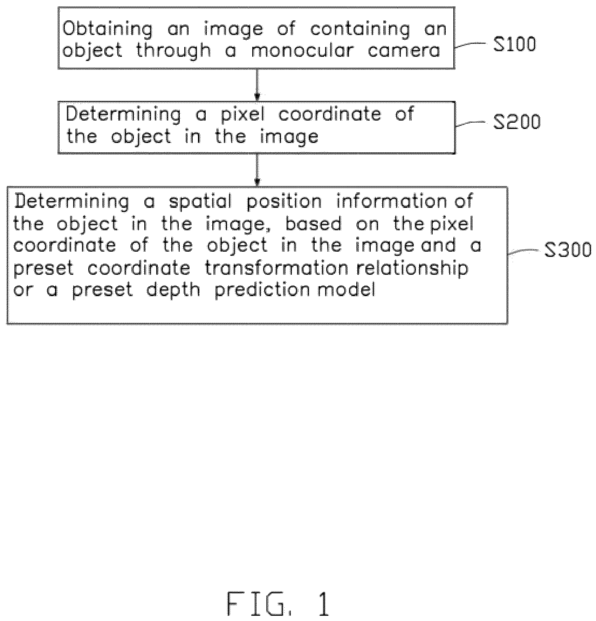

FIG. 1 illustrates one exemplary embodiment of an object detection method. The flowchart presents an exemplary embodiment of the method. The exemplary method is provided by way of example, as there are a variety of ways to carry out the method. Each block shown in FIG. 1 may represent one or more processes, methods, or subroutines, carried out in the example method. Furthermore, the illustrated order of blocks is illustrative only and the order of the blocks can change. Additional blocks can be added, or fewer blocks may be utilized, without departing from this disclosure. The example method can be begun at block S100.

In block S 100, an image containing an object is obtained through a monocular camera.

In one embodiment, a monocular camera installed on a sweeping robot is taken as an example. An image containing an object is obtained by a monocular camera, such as a RGB camera or an IR camera. Installation height and installation angle of a monocular camera of the sweeping robot are fixed, in other words, spatial characteristics of the monocular camera installed on the sweeping robot are fixed, the spatial characteristics of the monocular camera may comprise a height and an angle of the monocular camera installed on the sweeping robot relative to the ground.

Because the monocular camera has the advantages of convenient installation, small volume, and low cost, it has a broader application prospect in the field of obstacle detection. Therefore, in one embodiment, information as to the environment around the sweeping robot is obtained by a monocular camera. A binocular camera can be used in place of the monocular camera.

In block S200, a pixel coordinate of the object in the image is determined.

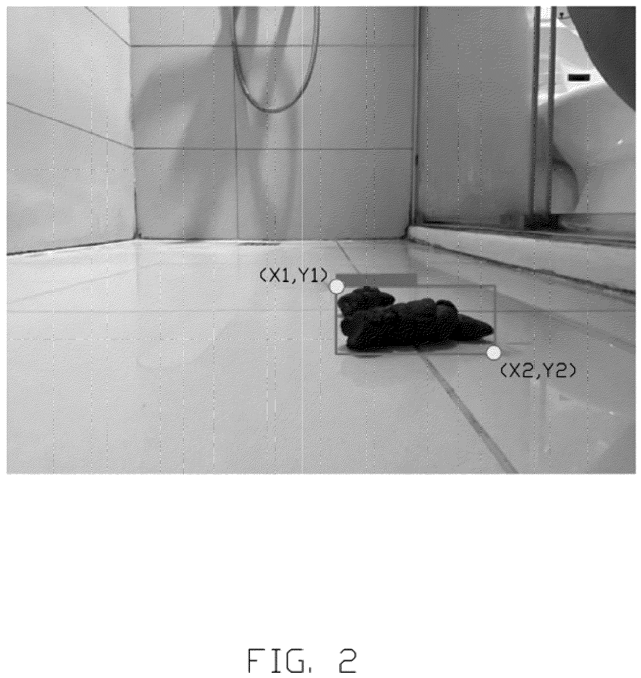

Further combined with FIG.2, each pixel in the image represents a set of image coordinates (X, Y), the bounding box of the object in the image can be obtained by an object detection algorithm, the pixel coordinates of the object are obtained based on the bounding box to determine the positioning coordinates of the object (X1, Y1), (X2, Y2). For example, the object detection algorithm comprises a YOLO algorithm (for example, YOLOv3 algorithm). Preferably, when the bounding box of the object is acquired, the relevant information of confidence in object recognition and object type can be extracted by the YOLO algorithm.

The advantage of the YOLOv3 algorithm is being able to use Darknet53 network as the backbone. The Darknet53 network uses extensive residual skip connections like the ResNet network to deepen the network. Feature extraction can extract higher-level features and reduce the negative effect of gradient caused by pooling. The robustness and generalization ability of the algorithm are very good and can effectively obtain the object coordinates, species, and other information.

In block S300, a spatial position of the object in the image is determined, based on the pixel coordinate of the object in the image and a preset transformation relationship or a preset depth prediction model.

In one embodiment, establishing the preset coordinate transformation relationship comprises following blocks. The pixel coordinate of the object in the image with the monocular camera as center is converted into an actual coordinate of a global coordinate system through an internal parameter of the monocular camera and a pinhole imaging principle to establish the preset coordinate transformation relationship.

Specifically, the monocular camera is calibrated by a camera calibration algorithm to obtain the internal parameters of the monocular camera. The pixel coordinates of the object of the image are converted into the actual coordinates of the global coordinates system through the internal parameters of the monocular camera to establish a preset coordinate conversion relationship. Internal parameters of the monocular camera can comprise a focal length and a pixel coordinate of the projection point which are formed by the optical center of the image captured by the monocular camera.

In one embodiment, the spatial position of the object in the image is determined based on the pixel coordinate of the object in the image and the preset coordinate transformation relationship, this step is explained in the following blocks. The pixel coordinate of the object in the image is converted into the actual coordinate of the world coordinate system through the preset coordinate conversion relationship. A spatial position of the object in the image is obtained according to the actual coordinate of the world coordinate system.

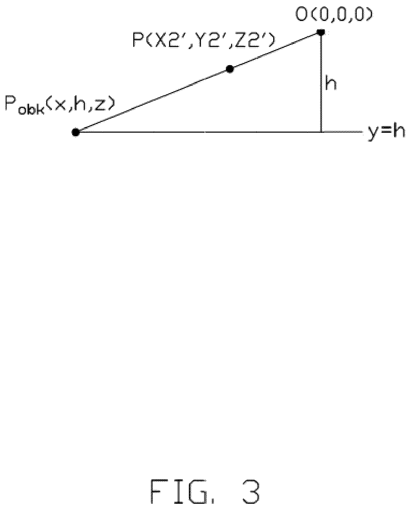

Further combined with FIG.3, the pixel coordinate (X2, Y2) of the object in the image is converted into the actual coordinates P (X2', Y2', Z2') of the world coordinate system by the preset coordinate conversion relationship. Further, the intersection P_{obk} (X, h, Z) of the line P and O with the plane y = h at the bottom represents the real-world position of the object in FIG. 2, h is the distance between the monocular camera and the ground. In order to the sweeping robot to realize obstacle avoidance, it is necessary to detect the obstacles on the ground. Therefore, the monocular camera does not need a great depth in the vertical direction. The lens can be moved up and down for wide-angle imaging and one snapshot.

In one embodiment, after the two coordinate points (X1, Y1) and (X2, Y2) shown in FIG.2 are converted into actual coordinates of the global coordinate system, the width of the object on the ground is obtained. An intelligent obstacle avoidance function is constructed by inputting information as to the spatial position into the preset path planning algorithm.

In addition to the application of the above pinhole imaging principle, the preset depth prediction model for the monocular camera can also be generated by statistical learning methods, such as machine learning.

In one embodiment, a method of establishing the preset depth prediction model comprises following blocks. A depth marking point at different positions of the ground is set, a three-dimensional coordinate of the depth marking point is obtained to generate a training data set according to depth information of the depth marking points in a marking process and a pixel coordinate corresponding to the depth marking points in the image captured by the monocular camera, and the preset depth prediction model is generated through feature engineering of the training data set and a preset modeling algorithm.

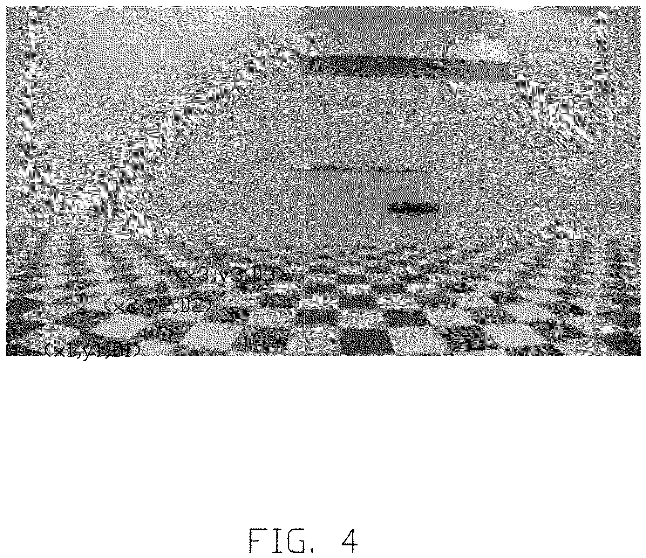

Specifically, further combined with FIG.4, depth marking points with depth information are set at different positions on the ground using chessboards of known size. Then, according to the depth information of the depth marking points in the marking process and the pixel coordinates of the depth marking points in the image taken by the monocular camera, the three-dimensional coordinates of the depth marking points are obtained, such as (x1,y1,D1), (x2,y2,D2), (x3,y3,D3)...(xn, yn, Dn) as in FIG.4. Through feature engineering, other features can be derived from the original coordinates x and y, such as x^{∗}y, x^{m}, y^{m}, e^{x}, e^{y}..., etc. The preset depth prediction model of depth D is generated by preset modeling algorithms, such as linear regression, decision tree, and support vector machine. Linear regression is a statistical analysis method to determine two or more variables by using regression analysis in mathematical statistics. It is widely used and shown as y = w'x+e, e being a normal distribution of which an error obeys the mean of 0. Decision tree is a decision analysis method to determine feasibility, on the basis of the known probability of occurrence of various situations, the probability that the expected value of net present value is greater than or equal to zero is calculated by constructing the decision tree to evaluate the project risk, so the decision tree is a graphical method for intuitive use of probability analysis. The support vector machine is a generalized linear classifier which uses supervised learning to classify the data, the decision boundary of support vector machine is the maximum-margin hyperplane for learning samples.

In one embodiment, a preset depth prediction model for depth D is generated by using deep learning to perform end-to-end modeling with the two coordinates x and y.

In one embodiment, determining the spatial position of the target object in the target image based on the pixel coordinate of the target object in the target image and the preset depth prediction model can be done in several ways; in addition to a checkerboard, there is the method of marking default depth markers on the ground, such as when using a depth camera, laser projection, and the like.

In one embodiment, the spatial position of the object in the image is determined based on the pixel coordinate of the object in the image and the preset depth prediction model. A pixel coordinate of the object is input into the preset depth prediction model to obtain a depth value of the object, and a spatial position of the object in the image is determined.

Specifically, after the preset depth prediction model is completed, the coordinates x and y of the ground in the image obtained by the monocular camera is input into the preset depth prediction model to obtain the corresponding depth value.

The monocular camera can be fixed at different heights or field of view angle of the sweeping robot to change the vision of the ground vision covered by the monocular camera. Through the above method, a new preset coordinate transformation relationship or a preset depth prediction model is established, and then the computable or predicted space range can be changed to apply in different places and needs, so as to improve applicability of the sweeping robot.

In the above embodiment, the object detection method acquires the image containing the object through the monocular camera installed on the sweeping robot and determines the pixel coordinates of the object in the image. Then, according to the pixel coordinate of the object in the image and a preset transformation relationship or a preset depth prediction model, a spatial position of the object in the image is determined. The object detection method can effectively solve the problems of high cost, complex structure, poor real-time performance, and low accuracy of visual ranging, detecting the object efficiently and accurately, so that the sweeping robot can avoid obstacles that should be avoided, such as feces, biological objects, socks, etc. At the same time, the sweeping robot will not contact obstacles which may spread dirt further on the ground, or cause biological injury or shock, as well as problems in vacuuming. Therefore, there are significant economic benefits for expanding the intelligent obstacle avoidance ability or other positioning requirement of the sweeping robot.

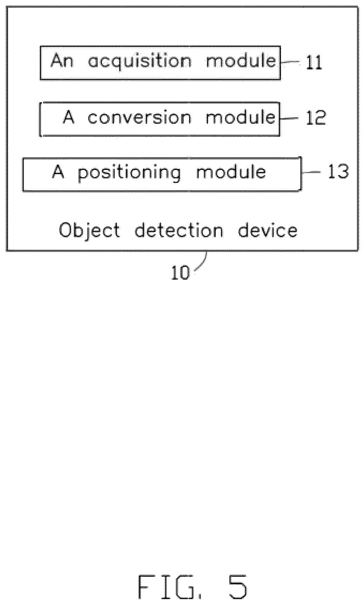

Further combined with FIG.5, one exemplary embodiment of an object detection device 10 is illustrated. The object detection device 10 performs the object detection method. Note that the function module diagram of the object detection device 10 only shows the part related to implementation in the example. Technicians in this field can understand that the graphic structure does not constitute a limitation on the object detection device 10, other examples can include more or less parts than the graphic shown, or combine some parts, or have a different arrangement of parts.

Specifically, in one embodiment, the object detection device 10 comprises an acquisition module 11, a conversion module 12, and a positioning module 13. The acquisition module 11 obtains an image containing an object through a monocular camera, the conversion module 12 determines a pixel coordinate of the object in the image, and the positioning module 13 determines a spatial position of the object in the image, based on the pixel coordinate of the object in the image and a preset transformation relationship or a preset depth prediction model.

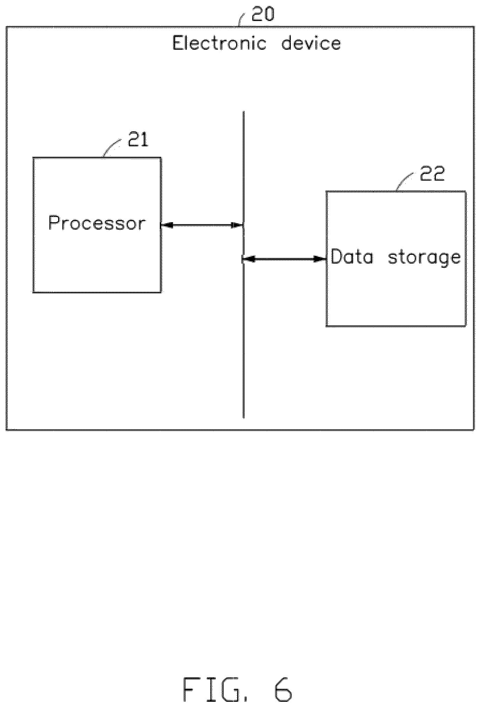

As shown in FIG.6, one exemplary embodiment of an electronic device 20 comprises at least one processor 21 and a data storage 22. The data storage 22 stores one or more programs which can be executed by the at least one processor 21. The data storage 22 is used to store instructions, and the processor 21 is used to call up instructions from the data storage 22, so that the electronic device 20 performs the steps of the object detection method in the above embodiment. The electronic devices 20 can be desktop computers, laptops, handheld computers, cloud servers and other computing devices. The electronic devices 20 can interact with users through keyboard, mouse, remote control, touchpad, or voice control devices.

In one embodiment, a non-transitory storage medium recording instructions is disclosed. When the recorded computer instructions are executed by a processor of an electronic device 20, the electronic device 20 can perform the method.

The embodiments shown and described above are only examples. Many details known in the field are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. An object detection method, comprising:
obtaining an image of containing an object through a monocular camera;
determining a pixel coordinate of the object in the image; and
determining a spatial position information of the object in the image, based on the pixel coordinate of the object in the image and a preset coordinate transformation relationship or a preset depth prediction model.

2. The object detection method of claim 1, wherein an establishment method of the preset coordinate transformation relationship comprises:
converting the pixel coordinate of the object in the image with the monocular cameras as center into an actual coordinate of a world coordinate system through an internal parameter of the monocular camera and a pinhole imaging principle to establish the preset coordinate transformation relationship.

3. The object detection method of claim 2, wherein determining the spatial position information of the object in the image, based on the pixel coordinate of the object in the image and the preset coordinate transformation relationship comprises:
converting the pixel coordinate of the object in the image into the actual coordinate of the world coordinate system through the preset coordinate transformation relationship; and
obtaining the spatial position information of the object in the image according to the actual coordinate of the world coordinate system.

4. The object detection method of claim 1, wherein an establishment method of the preset depth prediction model comprises:
setting depth marking points at different positions of a ground;
obtaining a three-dimensional coordinate of depth marking points to generate a training data set according to depth information of the known depth point in a marking process and a pixel coordinate corresponding to depth marking points in the image captured by the monocular camera; and
generating the preset depth prediction model through a feature engineering processing of the training data set and a preset modeling algorithm.

5. The object detection method of claim 4, wherein determining the spatial position information of the object in the image based on the pixel coordinate of the object in the image and the preset depth prediction model comprises:
inputting a pixel coordinate of the object into the preset depth prediction model to obtain a depth value of the object and determining a spatial position information of the object in the image.

6. The object detection method of claim 4, wherein setting the depth marking points at different positions of the ground comprises:
setting the depth marking points at different positions of the ground through a chessboard or a laser projection.

7. The object detection method of claim 1, wherein an installation height and an installation angle of the monocular camera are fixed.

8. An electronic device (20) comprising:
at least one processer (21); and
a data storage (22) storing one or more programs which when executed by the at least one processor (21), cause the at least one processor (21) to:
obtain an image of containing an object through a monocular camera;
determine a pixel coordinate of the object in the image; and
determine a spatial position information of the object in the image, based on the pixel coordinate of the object in the image and a preset coordinate transformation relationship or a preset depth prediction model.

9. The electronic device (20) of claim 8, wherein an establishment method of the preset coordinate transformation relationship comprises:
converting the pixel coordinate of the object in the image with the monocular cameras as center into an actual coordinate of a world coordinate system through an internal parameter of the monocular camera and a pinhole imaging principle to establish the preset coordinate transformation relationship.

10. The electronic device (20) of claim 9, wherein determining the spatial position information of the object in the image, based on the pixel coordinate of the object in the image and the preset coordinate transformation relationship comprises:
converting the pixel coordinate of the object in the image into the actual coordinate of the world coordinate system through the preset coordinate transformation relationship; and
obtaining the spatial position information of the object in the image according to the actual coordinate of the world coordinate system.

11. The electronic device (20) of claim 8, wherein an establishment method of the preset depth prediction model comprises:
setting depth marking points at different positions of a ground;
obtaining a three-dimensional coordinate of depth marking points to generate a training data set according to depth information of the known depth point in a marking process and a pixel coordinate corresponding to depth marking points in the image captured by the monocular camera; and
generating the preset depth prediction model through a feature engineering processing of the training data set and a preset modeling algorithm.

12. The electronic device (20) of claim 11, wherein determining the spatial position information of the object in the image based on the pixel coordinate of the object in the image and the preset depth prediction model comprises:
inputting a pixel coordinate of the object into the preset depth prediction model to obtain a depth value of the object and determining a spatial position information of the object in the image.

13. The electronic device (20) of claim 11, wherein setting the depth marking points at different positions of the ground comprises:
setting the depth marking points at different positions of the ground through a chessboard or a laser projection.

14. The electronic device (20) of claim 8, wherein an installation height and an installation angle of the monocular camera are fixed.

15. A non-transitory storage medium (22) having stored thereon instructions that, when executed by a processor (21) of an electronic device (20), causes the electronic device (20) to perform an object detection method, the object detection method comprises:
obtaining an image of containing an object through a monocular camera;
determining a pixel coordinate of the object in the image; and
determining a spatial position information of the object in the image, based on the pixel coordinate of the object in the image and a preset coordinate transformation relationship or a preset depth prediction model.
